(19) Europäisches Patentamt
European Patent Office
Office européen des brevets

(11) Numéro de publication: **0 267 856 B1**

(12) # FASCICULE DE BREVET EUROPEEN

(45) Date de publication de fascicule du brevet: **29.04.92**

(51) Int. Cl.[5]: **C08G 63/68**, B32B 27/36

(21) Numéro de dépôt: **87420269.0**

(22) Date de dépôt: **02.10.87**

(54) **Films polyesters composites à adhérence améliorée et leur procédé d'obtention.**

(30) Priorité: **06.10.86 FR 8613978**

(43) Date de publication de la demande:
**18.05.88 Bulletin 88/20**

(45) Mention de la délivrance du brevet:
**29.04.92 Bulletin 92/18**

(84) Etats contractants désignés:
**BE DE GB IT LU NL**

(56) Documents cités:

**JAPANESE PATENTS REPORT, vol. 85, no. 37, 5-11 septembre 1985, page 11, Section CH: Chemical J8-A, Derwent Publications, London, GB; & JP-B-85 040 387 (TOYOBO K.K.) 10-09-1985**

(73) Titulaire: **RHONE-POULENC FILMS**
**25, quai Paul Doumer**
**F-92408 Courbevoie(FR)**

(72) Inventeur: **Grosjean, Pierre**
**14, rue Alexandre Berthier**
**F-69110 Sainte-Foy-Les-Lyon(FR)**

(74) Mandataire: **Rioufrays, Roger et al**
**RHONE-POULENC INTERSERVICES Service Brevets Chimie Centre de Recherches des Carrières B.P. 62**
**F-69192 Saint-Fons Cédex(FR)**

EP 0 267 856 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(-/2.18/2.0)

## Description

La présente invention a pour objet des films polyesters composites orientés présentant, notamment, une adhérence améliorée vis-à-vis de revêtements finals d'application variés.

Par l'expression "revêtements finals d'application" on désigne, au sens de la présente invention, les revêtements qui confèrent aux films polyesters orientés des propriétés rendant possible des applications industrielles extrêmement diverses, bien connues du spécialiste. On sait que pour nombre d'applications industrielles, les films polyesters ne peuvent être utilisés directement mais seulement après dépôt d'un revêtement adapté à chaque type d'application ; on peut citer à titre d'exemple des revêtements de matage destinés au dessin manuel ou aux tables traçantes ; les revêtements photosensibles pour les applications photographiques ; les revêtements diazoïques pour les applications microfilms, tirage de plans ou reprographie ; les revêtements d'impression ; les revêtements magnétiques pour la saisie d'informations diverses (sons, images, informatique) ; les revêtements métalliques ; les revêtements modifiant les propriétés de perméabilité aux gaz des films polyesters utilisés comme emballages.

On sait encore que, par nature, l'accrochage des revêtements finals d'application sur la surface des films polyester n'est pas aisée. En effet, les films polyesters présentent une surface relativement lisse et ont une réactivité chimique limitée et une très faible sensibilité aux solvants. Il est donc le plus souvent nécessaire de mettre d'abord en oeuvre un revêtement "primaire d'adhérence", - permettant l'ancrage des couches d'emploi - selon des formules chimiques plus ou moins complexes. De façon générale, ce primaire d'adhérence (ou couche d'ancrage) est mis en place par le transformateur. Il est donc facile pour ce dernier d'adapter la nature du primaire à l'application faite ultérieurement.

Les producteurs de films ont cherché à modifier eux-mêmes la surface des films par divers moyens. A cet effet on a proposé l'emploi comme primaire d'adhérence de polymères de nature variée. Le plus souvent on a fait appel à des polymères ou copolymères acryliques mis en oeuvre, de préférence, sous forme de latex ou à des copolyesters modifiés et en particulier à des copolyesters se caractérisant par la présence dans leur structure de groupes hydrophiles et en particulier de groupes sulfonyloxy (groupes hydroxysulfonyles on leurs sels métalliques). Le procédé de revêtement des films polyesters par des copolyesters à groupes sulfonyloxy (copolyesters sulfonés) dépend du caractère hydrophile plus ou moins prononcé du polyester lié lui-même à la teneur en groupe sulfonyloxy. Ainsi, lorsque cette teneur est suffisamment élevée pour que le copolyester soit soluble ou dispersable dans l'eau, le revêtement est réalisé par enduction du film polyester au moyen d'une solution ou d'une dispersion aqueuse (cf. brevets français 1.401.581 et 1.602.002 ; brevet américain n° 4.476.189 ; brevet européen n n° 78 559). Lorsque le copolyester sulfoné n'est pas dissipable (soluble ou dispersable) dans l'eau, on a recours de préférence à un dépôt par coextrusion d'un polyester usuel et d'un copolyester sulfoné (cf. demandes de brevet japonais publiées sous les n° 50/134.086 ; 54/153.883). L'industrie s'oriente vers l'utilisation de films polyesters à primaires d'adhérence à large spectre d'utilisation susceptibles de satisfaire les besoins divers des transformateurs finals. L'obtention de tels films n'a pas été rendue possible par l'utilisation des primaires d'adhèrence proposés jusqu'ici. La présente invention se propose précisément de satisfaire ce besoin de l'industrie en films polyesters composites aptes à recevoir des revêtements finals d'application variés, de caractère hydrophiles ou organo philes et cela sans porter atteinte aux autres propriétés exigées des films polyesters et notamment la machinabilité. En particulier, il est important que le primaire d'adhérence ne donne pas naissance aux phénomènes de collage du film sur lui-même aux températures de transformation et/ou de stockage. Enfin il est également important que le polyester comportant le primaire d'adhérence puisse être recyclé à l'extrusion du polyester frais sans que cela modifie sensiblement les propriétés des films obtenus à partir de ces mélanges. Il est de pratique courante, en effet, de récupérer le polyester des déchets inhérents à la production des films. En définitive, la présente invention a pour objet de nouveaux films polyesters orientés composites à adhérence améliorée vis-à-vis de revêtements finals d'application variés, ne collant pas aux températures de transformation et/ou de stockage et dont les déchets peuvent être aisément recyclés à l'extrusion du polyester usuel sans modifier sensiblement les propriétés des films obtenus.

Plus spécifiquement, la présente invention a pour objet des films polyester composites orientés, à adhérence améliorée vis-à-vis des revêtements finals d'application constitués par un film support (A) d'un polyester cristallin ou semi-cristallin, comportant sur au moins une de ses faces une couche contigüe d'un revêtement primaire d'adhérence (B) à base d'un copolyester sensible à l'eau caractérisé en ce que la couche (B) est constituée apr un mélange ternaire comprenant :

a) de 30 à 65 % en poids d'un polyester cristallin, semi-cristallin ou cristallisable ;

b) de 15 à 60 % en poids d'un copolyester sensible à l'eau présentant une pluralité de groupes hydrophiles de formule générale :

$(-SO_3)_nM$ (I)

dans laquelle :

- n est étal à 1 ou 2
- M représente un atome d'hydrogène, un métal alcalin, un métal alcalino-terreux, un cation ammonium, un cation ammonium quaternaire.

c) de 10 à 55 % en poids d'un polyester ou copolyester non cristallisé et non cristallisable présentant à température ordinaire une réaction visible (gonflement, gel, trouble, solubilité) vis-à-vis des solvants organiques.

Par polyester cristallisable, on désigne dans la présente demande des polyesters ou copolyesters qui, après extrusion à l'état fondu à travers une filière puis étirage du polymère amorphe, conduisent à des polyesters ou copolyesters cristallins ou semi-cristallins. La cristallinité des polymères est déterminée par les moyens usuels bien connus de spécialiste tels que la diffraction des rayons X, l'analyse thermique différentielle (cf. S.H.LIN et al J. Polymer Sci. Polymer Symposium 71 121-135 [1984]) et le test de densité.

Les polyesters cristallins ou cristallisables mis en oeuvre pour la préparation de la couche support (A) et comme constituant (a) du mélange ternaire de la couche de primaire d'adhérence (B) sont les polyesters et copolyesters utilisés habituellement pour l'obtention des films polyesters orientés par étirage et présentant une structure cristalline ou semi-cristalline. Ces polyesters se caractérisent par leur caractère hydrophobe et une relative insensibilité aux solvants organiques industriels tels que les esters, les cétones ou les hydrocarbures halogénés et notamment chlorés. Plus particulièrement les polyesters cristallins ou cristallisables utilisés comme constituant (a) du mélange ternaire présentent un volume de solubilité inférieur à $10^{-2}$ $(cal/cm^3)^{3/2}$.La définition de volume de solubilité a été donnée par C. HANSEN dans J. Paint Technology 39 (1967) n° 505 p. 104 ; n° 511 p. 505 et 511.

Comme polyesters cristallins, semi-cristallins ou cristallisables utilisés pour l'obtention de la couche support (A) et comme constituant (a) du mélange ternaire, on peut utiliser tout polyester filmogène obtenu à partir d'un ou de plusieurs diacide(s) carboxylique(s) ou de leurs esters d'alkyle inférieur, (acide téréphtalique, acide isophtalique, acide naphtalènedicarboxylique-2,5, acide naphtalènedicarboxylique-2,6, acide naphtalènedicarboxylique-2,7, acide succinique, acide sébacique, acide adipique, acide azélaïque, acide diphényldicarboxylique et acide hexahydrotéréphtalique) et d'un ou plusieurs diols ou polyols comme l'éthylèneglycol, le propanediol-1,3, le butanediol-1,4, le néopentylglycol et le cyclohexanediméthanol-1,4, les polyoxyalkylèn eglycol (polyoxyéthylèneglycol, polyoxypropylèneglycol ou leurs copolymères statistiques ou séquencés). Lorsqu'on fait appel à des copolymères, ils doivent présenter un taux suffisant du ou des composant(s) monomère(s) conférant la cristallinité. On fait appel de préférence aux homopolyesters et aux copolyesters dérivés de l'acide téréphthalique. Dans le cas des copolyesters, ces derniers comportent de préférence un taux de motifs téréphtalate représentant au moins 80 % en moles des motifs diacides et plus préférentiellement au moins 90 %. Les polyesters et copolyesters dérivés de l'éthylèneglycol et du butanediol-1,4 constituent une classe préférée de polymères utilisés pour la réalisation de la couche support (A) et comme composant (a) du mélange ternaire du primaire d'adhérence constituant la couche (B). Il n'est pas essentiel pour la réalisation de l'invention que les polymères cristallins (cristallisables) mis en oeuvre pour la couche (A) et pour la couche (B) soient identiques. Avantageusement, le polyester est un polytéréphthalate d'éthylèneglycol dont la viscosité intrinsèque mesurée à 25 ° C dans l'o-chlorophénol est comprise entre 0,6 et 0,75 dl/g.

Les copolyesters sensibles à l'eau (ou hydrophiles) utilisés comme constituant (b) de la couche (B) des films composites selon la présente invention confèrent à cette couche une affinité pour l'eau et les compositions aqueuses ou hydroorganiques de revêtements finals. Par copolyesters sensibles à l'eau on désigne, au sens de la présente invention, des produits présentant à température ordinaire au moins une légère réaction visible (gonflement, trouble, gel, solubilité) vis-à-vis de l'eau. Il s'agit de copolyesters présentant une pluralité de groupes oxysulfonyles de formule générale :

$(-SO_3)_nM$ (I)

dans laquelle :

- n est égal à 1 ou 2
- M représente un atome d'hydrogène, un métal alcalin (sodium ou potassium par exemple), un métal alcalino-terreux (calcium, barium), un cation ammonium, un cation ammonium quaternaire.

Les copolyesters à groupes oxysulfonyles sont des produits connus ; de tels copolyesters ont été décrits notamment dans les brevets français 1.401.581 et 1.602.002 déjà cités. Ces copolyesters peuvent être obtenus par polycondensation d'au moins un ou plusieurs acides dicarboxyliques aromatiques avec au moins un ou plusieurs diols aliphatiques et au moins un composé difonctionnel comportant au moins un groupe oxysulfonyle. Les composés difonctionnels à groupe oxysulfonyle peuvent être des diacides carboxyliques ou des diols tels que ceux cités dans le brevet français 1.602.002 ou le brevet américain n° 3.779.993. De préférence les groupes oxysulfonyles sont liés à un radical aromatique.

Parmi les composés difonctionnels à groupes oxysulfonyles on utilise plus préférentiellement des acides aromatiques de formule générale :

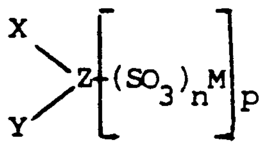

(II)

dans laquelle :

- M et n ont la signification déjà donnée ;
- Z est un radical aromatique polyvalent ;
- X et Y sont des radicaux hydroxycarbonyle ou dérivés : esters d'alcools aliphatiques inférieur ou halogénures d'acides (chlorure, bromure) ;
- p est un nombre entier égal à 1 ou 2.

Dans la formule (II), Z représente plus spécifiquement un radical phényle ou une combinaison de 2 ou plus de 2 radicaux phényles ortho ou péricondensés ou de deux ou plusieurs groupes phényles liés entre eux par des groupes inertes tels que des radicaux alcoylènes (méthylène, éthylène, propylène par exemple), alcoylidènes (propylidène) ou des groupes éther, cétone, sulfone.

Comme exemples spécifiques d'acides dicarboxyliques à groupes oxysulfonyles, on peut citer les acides hydroxysulfonyltéréphthalique ; hydroxysulfonylisophthaliques (en particulier l'acide sulfo-5 isophtalique) ; hydroxysulfonylorthophtaliques ; hydroxysulfonyl-4 naphtalènedicarboxylique-2,7 ; hydroxysulfonyldiphényl-dicarboxylique-4,4′ ; les hydroxysulfonyl di-hydroxycarbonyl-4,4′ diphénylsulfones; les hydroxysulfonyldihydroxycarbonyl-4,4′ diphénylméthanes ; l'acide (hydroxysulfonylphénoxy)-5 isophtalique, l'acide (hydroxysulfonylpropoxy)-5 isophthalique. Les copolyesters hydrophiles dérivés des acides hydroxysulfonylisophthaliques conviennent tout particulièrement bien à la préparation des films composites selon l'invention.

Les acides dicarboxyliques non sulfonés auxquels on fait appel pour préparer les copolyesters à groupes hydrophiles sont ceux habituellement utilisés pour l'obtention de polyesters. On peut citer à ce titre les acides téréphtalique ; isophtalique ; phtalique ; naphtalènedicarboxylique-2,5 ; naphtalènedicarboxylique-2,6 ; la dihydroxycarbonyl-4,4′ diphénylsulfone ; le dihydroxycarbonyl-4,4′ diphényléther. Ces acides peuvent être utilisé seuls ou en mélange entre eux ou avec des acides dicarboxyliques aliphatiques saturés tels que les acides adipique, succinique, sébacique. On fait appel, de préférence, aux acides téréphtalique et isophtalique et plus particulièrement à des mélanges de ces deux acides.

Parmi les diols utilisables pour préparer les copolyesters à groupes hydrophiles, on peut citer l'éthylèneglycol, le propylèneglycol, le butanediol-1,3, le butanediol-1,4, le diméthyl-2,2 propanediol-1,3, le pentanediol-1,5, l'hexanediol-1,6, le cyclohexanediméthanol, le diétylèneglycol, les tri-, tetra-, penta-et hexaéthylèneglycol. L'éthylèneglycol et ses oligomères conviennent tout particulièrement bien. On peut les utiliser seuls ou en mélange entre eux et/ou avec d'autres diols. Les mélanges d'éthylèneglycol et de ses oligomères de formule $HO-(CH_2-CH_2-O)_m-H$ dans laquelle m est un nombre entier de 2 à 10 sont préférés. Dans ce dernier cas la teneur en oligomères de l'éthylèneglycol exprimée, en pourcentage pondéral du polyester sulfoné est de préférence au moins égale à 2 % et au plus égale à 30 %. Une proportion comprise entre 5 et 25 % en poids convient bien.

La teneur des copolyesters hydrophiles en motifs récurrents comportant des groupes oxysulfonyles peut varier dans de larges limites. Cette teneur exprimée par rapport au nombre total de motifs récurrents de même nature (diacide ou diol) est de préférence comprise entre 5 et 20 %. Ainsi lorsqu'on fait appel à un acide dicarboxylique à groupes oxysulfonyle, le nombre de motifs récurrents dérivés de ce dernier représente de 5 à 20 % du nombre total des motifs récurrents dérivés des différents acides dicarboxyliques.

Parmi les copolyesters à groupes oxysulfonyles utilisés comme composant (b) du primaire (B) on fait appel préférentiellement à ceux comportant dans leur chaîne une pluralité de motifs téréphtalate oxysulfonyl-5 isophtalate, éventuellement isophtalate et une pluralité de motifs dérivés de l'éthylèneglycol et/ou de ses oligomères. On a recours avantageusement à des copolyesters dans lesquels le nombre de motifs récurrents oxysulfonyl-5 isophtalates représentent de 5 à 20 % du nombre total des motifs dérivés des acides dicarboxyliques. Lorsque les copolyesters comportent à la fois des motifs téréphtalates et isophtalates, ces derniers représentent de préférence 70 % au plus de total téréphtalate/isophtalate. Un nombre de motifs isophtalates compris entre 5 et 70% de ce total convient bien.

Les copolyesters à groupes hydrophiles décrits précédemment peuvent être obten us par les procédés connus habituels. Ainsi il est possible de faire réagir dans un premier temps le diol ou les diols avec un ester méthylique du ou des acides carboxyliques, l'un ou l'autre groupe de réactif comportant le composé difonctionnel à groupe(s) hydrophyle(s), pour former par transestérification, en présence des catalyseurs habituels, les esters des diols correspondants puis, dans un deuxième temps, de réaliser la polycondensation de façon connue. Selon une autre méthode on peut préparer deux prépolycondensats dont l'un comprend les motifs récurrents à groupes hydrophyles et les faire réagir en présence des catalyseurs usuels jusqu'à obtention d'un copolyester de poids moléculaire plus élevé. Le copolyester à groupes hydrophyles peut être un copolyester à blocs ou un copolyester statistique.

Les polyesters sensibles aux solvants organiques (ou organophiles) utilisés comme composant (c) du mélange ternaire sont des polymères qui, lorsqu'ils sont mis en contact avec des solvants organiques du groupe des esters, des cétones et des hydrocarbures halogénés présentent, à température ordinaire, au moins une légère réaction visible (gonflement, trouble, gel). De préférence, les polyesters organophiles ont un volume de solubilité supérieur à $10^{-2}$ $(cal/cm^3)^{3/2}$ et plus préférentiellement un volume de solubilité supérieur à $10^{-1}$ $(cal/cm^3)^{3/2}$.

Comme polyesters organophiles ont peut utiliser des homopolyesters ou des copolyesters de préférence non cristallisés et non cristallisables comportant des motifs apportant la sensibilité aux solvant usuels du groupe précité et en particulier vis-à-vis de solvants tels que l'acétone, la méthyléthylcétone, l'acétate d'éthyle, le dichloroéthane.

Les polyesters organophiles peuvent être obtenus à partir d'un ou plusieurs acides dicarboxyliques, aliphatiques et/ou aromatiques et d'un ou plusieurs diols aliphatiques convenablement choisis, de façon à conférer aux polymères une sensibilité suffisante aux solvants du groupe précité.

Parmi les acides qui peuvent être utilisés pour la préparation des polyesters organophiles on peut citer : des diacides aromatiques tels que les acides téréphtalique, isophtalique, phtalique, naphtalènedicarboxylique-2,6 ; des diacides aliphatiques ou cycloaliphatiques tels que les acides adipique, succinique, sébacique, décanedicarboxylique-1,10, cyclohexanedicarboxylique-1,4.

Parmi les diols auxquels on peut faire appel, on peut citer l'éthylèneglycol et ses oligomères (diéthylèneglycol, triéthylèneglycol, tétraéthylèneglycol), le propylèneglycol, le butanediol-1,4, le pentanediol-1,4, l'hexanediol-1,6, le décanediol-1,10, le cyclohexanediméthanol, le néopentylglycol.

Les polyesters organophiles peuvent être des homopolymères ou des copolymères pour autant que les composés difonctionnels composant leurs chaînes soient de nature à conférer la sensibilité aux solvants telle qu'elle a été définie plus haut et en particulier un volume de solubilité supérieur à $10^{-2}$ $(cal/cm^3)^{3/2}$. Il est en effet nécessaire d'introduire dans la chaîne du polyester des motifs hydrocarbonés aliphatiques en quantité suffisante pour obtenir des polyesters sensibles aux solvants. Ainsi le polytéréphtalate d'éthylèneglycol ou les copolyesters cristallins ou cristallisables dérivés de l'acide téréphtalique, de diacides aromatiques et d'éthylèneglycol et/ou de ses oligomères ne peuvent être utilisés comme polyesters sensibles aux solvants au sens de la présente invention. Lorsqu'on fait appel à des copolyesters dérivés de l'acide téréphtalique et de l'éthylèneglycol et/ou de ses oligomères comme polyesters organophiles, lesdits copolyesters doivent comporter une proportion de motifs récurrents dérivés d'autres acides aromatiques (acide isophtalique par exemple) et/ou aliphatiques (acide adipique) et/ou de diols autres que l'éthylèneglycol et ses oligomères et notamment d'alkylènediols comportant dans la partie alkylène un nombre d'atome d e carbone supérieur ou égal à 3 (butanediol, néopentylglycol, bis-hydroxyméthylcyclohexane par exemple) suffisante pour présenter la sensibilité aux solvants au sens de l'invention. La proportion de ces motifs récurrents dépend évidemment de leur nature et doit être déterminée dans chaque cas particulier.

Bien que l'on puisse faire appel à tout homopolyester ou copolyester organophile, au sens de l'invention, les copolyesters présentant des motifs téréphtalate d'éthylèneglycol et une proportion de motifs dérivés d'autres diacides et/ou d'autres diols suffisante pour apporter la sensibilité aux solvants, et en particulier un volume de solubilité supérieur à $10^{-2}$ $(cal/cm^3)^{3/2}$, constituent une classe préférée de

copolyesters organophiles utilisés comme composant (c) du primaire d'adhérence. A ce titre, on peut citer les copolyesters dérivés de l'acide téréphtalique, de l'éthylèneglycol et du cyclohexanediméthanol ou de l'acide téréphtalique, de l'acide isophtalique, de l'éthylèneglycol et du néopentylglycol.

Les proportions pondérales des composants a), b) et c) dans le mélange ternaire constituant le primaire (B) peuvent varier dans de larges limites en fonction de la nature des composants b) et c) et selon que l'on désire favoriser l'adhérence à des revêtements finals aqueux ou organiques. Les proportions des trois constituants du mélange ternaire sont comprises dans les intervalles suivants :

a) de 30 à 65 % en poids du mélange ;
b) de 15 à 60 % en poids du mélange ;
c) de 10 à 55 % en poids du mélange ;

et, plus préférentiellement, dans les intervalles suivants :

a) de 35 à 60 % ;
b) de 20 à 55 % ;
c) de 10 à 50 %.

Les couches (A) et/ou (B) des films composites de l'invention peuvent contenir de fines particules destinées à modifier la rugosité de la surface de la couche qui les contient en leur confèrant de bonnes propriétés de glissant.

Les charges présentes peuvent correspondre à de fines particules introduites dans la composition polymèrique et/ou à des particules provenant de résidus catalytiques ou d'adjuvants de précipitation. Préférentiellement la rugosité est apportée par introduction de fines particules inertes dans la composition polymérique.

Les quantités de particules présentes sont telles que dans l'ensemble de la couche il y ait de 0,05 à 1 % et préférentiellement de 0,02 à 0,5 % en poids de particules. Quant au diamètre médian en volume de ces particules il est habituellement compris entre 0,1 et 5 microns et préférentiellement entre 0,2 et 3 microns.

La nature des particules inertes ajoutées peut être très variée : il peut s'agir de particules minérales) oxydes ou sels des éléments des groupes II, III et IV de la classification périodique des éléments), ou encore de particules polymériques. A titre illustratif, on peut citer parmi les charges utilisables : la silice, les silicoaluminates, le carbonate de calcium, MgO, $Al_2O_3$, $BaSO_4$, $TiO_2$. On peut évidemment faire appel à un mélange de plusieurs charges.

Lorsque la couche (B) contient des particules à l'état finement divisé, celles-ci peuvent être amenées par l'un quelconque ou plusieurs des polyesters constituants du mélange. Elles peuvent correspondre à de fines particules introduites dans la composition polymérique et/ou à des particules formés par précipitation de résidus catalytiques ou d'adjuvants de précipitation.

Selon une variante de la présente invention les couches (A) et/ou (B) peuvent contenir en outre des additifs divers, utilisés habituellement dans le domaine de l'industrie du film, tels que, par exemple, des stabilisants thermiques permettant d'assurer le recyclage du film.

Les films composites, selon la présente invention, peuvent comporter une seule couche (B) ou deux couches (B) (une couche B sur chaque face de la couche support A). Dans ce cas les couches (B) peuvent être identiques ou différentes. Les couches (B) peuvent alors se différencier par la nature des polyesters a), b) et c) constituant le mélange ternaire et/ou les proportions de a), b) et c) dans le mélange, et/ou la présence ou l'absence de charges, et/ou par le taux de charge : et/ou bien encore par leur épaisseur.

Le polyester cristallin, semi-cristallin ou cristallisable (a) utilisé comme constituant du mélange ternaire peut être identique ou différent du polyester cristallin, semi-cristallin ou cristallisable constituant la couche (A). Cette différence peut résider dans la nature du polyester et/ou dans la présence d'une charge dans l'un ou l'autre des polyesters et/ou dans la teneur en charge de chacun des polyesters et/ou dans la granulométrie des charges et/ou dans la nature des charges. Ainsi, à titre d'exemple, le polyester constituant la couche (A) peut être un polytéréphtalate d'éthylèneglycol et le composant (a) du mélange ternaire, un copolyester cristallin ou cristallisable téréphtalate/isophtalate d'éthylèneglycol contenant moins de 20 % en moles de motifs isophtalates, ou bien le polyester constituant la couche (A) est un polytéréphtalate d'éthylèneglycol non chargé et le constituant (a) du mélange ternaire est le même polyester contenant une charge.

Lorsque les films composites conformes à l'invention ne comporte qu'une couche (B), l'autre face de la couche (A) peut comporter une couche (C) différente des couches (A) et (B). La couche (C) peut se distinguer de la couche (A) par la nature du polyester qui la constitue et/ou par la présence de charges dans l'une ou l'autre couche et/ou par la nature et/ou la granulométrie et/ou le taux de ces charges. On

dispose alors d'un moyen commode de modifier les propriétés de surface (topographie) de la face du film composite selon l'invention opposée à celle qui porte la couche (B). On peut alors en faire varier la rugosité, le coefficient de frottement, la résistance à l'abrasion en fonction de l'utilisation finale des films.

Les films composites de la présente inventon peuvent être obtenus par des procédés variés conventionnels. Avantageusement, on les fabrique par coextrusion en alimentant dans une première filière linéaire un polyester conduisant à des films amorphes et devenant cristallins ou semi-cristallins après avoir été soumis à un traitement d'étirage, puis à un traitement de thermofixation, alors que l'on extrude simultanément, par au moins une deuxième filière disposée parallèlement à la première et à sa proximité immédiate, le mélange ternaire.

Ce dernier peut être obtenu par toute technique connue de mélangeage et homogénéisation en un stade ou en plusieurs stades. Il peut être préparé directement juste avant son extrusion par fusion de ses composants à température élevée, ou peut avoir été préalablement préparé, extrudé et conditionné en granulés et remis en fusion après dilution éventuelle avec des granulés de polyester cristallin, semi-cristallin ou cristallisable.

Les conditions de préparation et d'extrusion du mélange ternaire sont choisies de façon à ne pas provoquer une évolution de ce mélange vers la formation de polymères blocs, voire même statistiques telle que les propriétés spécifique à chaque constituant du mélange seraient modifiées profondément ou disparaitraient (par exemple la cristallinité). En particulier, le temps de séjour du mélange dans l'extrudeuse assurant le mélangeage des composants et l'extrusion est maintenu suffisamment court pour ne pas provoquer de modification profonde des polymères.

Les conditions d'étirage du film composite extrudé sont celles habituellement mises en oeuvre dans la fabrication des films polyesters. Ainsi, on peut procéder à un monoétirage ou à un biétirage effectué successivement ou simultanément dans deux directions en général orthogonales ou encore de séquences d'au moins 3 étirages où la direction d'étirage est changée à chaque séquence. P ar ailleurs, chaque étirage monodirectionnel peut lui-même être effectué en plusieurs étapes. On pourra ainsi associer des séquences d'étirage comme par exemple deux traitements successifs de biétirage, chaque étirage pouvant être effectué en plusieurs phases.

De préférence, le film composite est soumis à un biétirage dans deux directions perpendiculaires. On peut par exemple procéder d'abord à un étirage dans la direction de déplacement du film (étirage longitudinal) puis à un étirage selon une direction perpendiculaire (étirage transversal) ou inversement. En général l'étirage longitudinal est effectué à un taux de 3 à 5 (c'est-à-dire que la longueur du film étiré représente de 3 à 5 fois la longueur du film amorphe) et à une température de 80 à 100 ° C et l'étirage transversal est effectué avec un taux de 3 à 5 à une température de 90 à 120 ° C.

L'étirage peut également être effectué de manière simultanée, c'est-à-dire simultanément dans le sens longitudinal et dans le sens transversal, par exemple avec un taux de 3 à 5 et à une température de 80 à 100 ° C.

Selon le choix des conditions d'étirage il est possible de générer des topographies particulières de surface telles que la présence de cavités entourant une protubérance. Cette possibilité de générer des topographies particulières dépend en outre du choix du polymère et de ses adjuvants.

Les films composites de l'invention peuvent être des films dits minces d'épaisseur globale comprise entre 5 et 50 microns ou des films dits épais dont l'épaisseur est habituellement comprise entre 50 et 300 microns. Dans ces films composites la couche (B) ou les couches (B) ont une épaisseur habituellement comprise entre 0,3 microns et 10 microns et préférentiellement entre 0,5 microns et 5 microns.

Les films composites de la présente invention peuvent compte-tenu de leurs propriétés d'ancrage être utilisés avantageusement dans de nombreux domaines ou après enduction ils constitueront des films pour arts graphiques (couche de matage), des films diazoïques pour microfilm, des films pour bande magnétique, des films photos (films argentiques), ou encore des films pour impression, complexage destinés à l'emballage.

On observera que du fait de la préparaton des films composites par coextrusion il est possible de maitriser la rugosité de surface grâce à l'utilisation de charges dispersées dans le polymère ; on peut ainsi apporter une diversification et une adaptation aux marchés pour une couche (B) donnée optimisée pour l'adhésion et en général non chargée.

Par ailleurs, compte-tenu de la composition du mélange ternaire (présence notable de polyester cristallin), et de l'épaisseur respectives des couches (A) et (B), il est possible sans préjudice pour la qualité du film de recycler jusqu'à 30 des mélanges obtenus par fusion des déchets des films composites dans le polyester constituant la couche (A).

Les exemples suivants illustrent l'invention et montrent comment elle peut être mise en pratique. Dans ces exemples les polyesters cristallins ou cristallisables seront désignés par (a), les polyesters sensibles à l'eau par (b) et les polyesters organophiles par (c). Les tests suivants seront utilisés :

1°) Tests de sensibilité à l'eau des polyesters (b) et de sensibilité aux solvants des polyesters (c)

Pour déterminer la sensibilité à l'eau ou aux solvants, on introduit 0,5 g de polyester dans 5 $cm^3$ d'eau ou d'un solvant organique convenable dans un tube à essai en verre de 1,8 cm de diamètre et 10 cm de hauteur et on maintient à 20 ° C pendant une semaine. On note alors si le polyester s'est dissout en totalité ou en partie dans l'eau ou le solvant choisi, ou bien s'il y a eu formation d'un gel, un gonflement plus ou moins prononcé ou aucune modification.

Les solvants de référence sont ceux cités précédemment : acétate d'éthyle ; acétone ; méthyléthylcétone ; dichloréthane ; trichloroéthyl ène.

2°) Tests de détermination de l'adhérence du film composite à divers types de revêtements finals d'application

A cet effet chaque film composite est revêtu sur la couche (B) d'un revêtement final par couchage manuel au moyen d'un appareil de marque commerciale HAND COATER dont la barre gravée d'enduction est choisie pour déposer 6 g de composition par $m^2$ de film. Le film enduit est séché en étuve ventilée pendant 1 minute à 150 ° C et stocké pendant 24 heures avant d'être soumis aux test d'adhérence suivants :

Test 3

Le composite est enduit par une composition diazoïque pour microfilms dont le solvant est l'acétone.

Test 8

Le composite est enduit par une composition de matage pour films à dessin à base d'alcool polyvinylique réticulé dans un solvant eau/alcool.

Test 10

Le composite est enduit par une composition de matage diazoïque pour film à dessin et reprographie consistant en une solution alcoolique d'un dérivé cellulosique.

Sur chacun des films enduits on procède à des essais d'arrachage du revêtement au moyen d'un ruban adhésif de marque commerciale MAGIC TAPE n° 810 de la Société MINNESOTA MINING MANUFACTURING. La pose du ruban est manuelle et l'arrachage se fait dans des conditions de sévérité croissante :

a) arrachage lent
b) arrachage rapide
c) arrachage avec scarification préalable du prevêtement final au moyen d'une lame de rasoir.
d) arrachage avec froissage préalable du film.

Pour chaque cas, la résistance à l'arrachage est notée de 1 (arrachage total aisé) à 10 (tenue parfaite du revêtement). Enfin une note globale de 1 à 10, tenant compte des notes attribuées pour chacune de conditions a) à d) donne une évaluation générale de la résistance à l'arrachage des revêtements finals pour chacun des tests 3, 8 et 10.

Dans les exemples ci-après on a fait appel aux polyesters suivants pour la préparation des composites :

1°) Polyester cristallisable (a)

Référence (al)

Polytéréphtalate d'éthylèneglycol de viscosité 0,62 dl/g mesuré à 25 ° C dans l'orthochlorophénol.

2°) Copolyester sensible à l'eau (b)

Référence (bl)

C'est un produit vendu sous la marque commerciale GEROL PS 20 40/60 par la Société RHONE-POULENC SPECIALITES CHIMIQUES.

Il s'agit d'un copolyester acide téréphtalique/acide isophtalique/acide sulfo-5 isophtalique/diéthylèneglycol comportant :

. 15 % en mole d'acide sulfo-5 isophtalique par rapport au total des acides.
. 40 % en mole d'acide téréphtalique par rapport au total acide téréphtalique + acide isophtalique.
. 60 % en mole d'acide isophtalique par rapport au total acide téréphtalique + acide isophtalique.
. 15 % en poids par rapport au copolyester de diéthylèneglycol.

Référence (b2)

Ce produit vendu sous la marque commerciale GEROL PS 20 80/20 est un copolyester comportant :

. 15 % en mole d'acide sulfo-5 isophtalique par rapport au total des acides.
. 80 % en mole d'acide téréphtalique par rapport au total acide téréphtalique + acide isophtalique.
. 20 % en mole d'acide isophtalique par rapport au total acide téréphtalique + acide isophtalique.
. 15 % en poids par rapport au copolyester de diéthylèneglycol.

3°) Polyesters organophiles (c)

Référence (cl)

Il s'agit d'un copolyester vendu sous la marque commerciale KODAR PETG par la Société KODAK du type acide téréphtalique/éthylèneglycol/cyclohexanediméthanol, ayant un volume de solubilité de 2,69 $(cal/cm^3)^{3/2}$.

Référence (c2)

Il s'agit d'un copolyester vendu sous la marque commerciale DYNAPOL L 206 par la Société DYNAMIT NOBEL du type acide téréphtalique/acide isophtalique/éthylèneglycol/néopentylglycol. Ce copolyester est soluble dans le trichloroéthlène et la méthylèthylcétone.

Les films composites sont préparés par coextrusion d'un film de polyester (a) et du mélange a/b/c. La ligne principle d'extrusion de la couche (A) travaille à 275°C et la ligne satellite d'extrusion de la couche (B) à température inférieure à 275°C.

Les mélanges de polyesters a/b/c ont été obtenus de la façon suivante : les polyesters utilisés comme constituant de la couche (A) et comme composant (a) du mélange ternaire sont séchés à 160°C pour éliminer toute trace d'humidité. Les polyesters (b) et (c) sont étuvés sous air déshydraté. Les trois composants, sous forme particulaire, sont conservés et alimentés dans les proportions choisies sous atmosphère d'un gaz inerte, dans l'extruseuse à vis de la ligne satellite d'extrusion.

Exemple 1

On prépare par coextrusion un film composite à 3 couches B/A/B, d'épaisseur totale 40 micromètres ; les couches (B) sont identiques et ont chacune une épaisseur de 1 micromètre. La couche (A) est constituée d'un polytéréphtalate d'éthylèneglycol (al) non chargé. Les couches (B) chargées sont constituées par le mélange suivant :

. 50 % en poids de polyester (a2) constitué par du polyester (al) contenant 0,4 % en poids de particules de kaolinite ayant un diamètre médian de 1,1 micromètre ;
. 25 % en poids de copolyester de référence (b2) ;
. 25 % en poids de copolyester de référence (cl).

Soumis aux tests d'adhésion décrits ci-avant, le film composite obtient les notes globales suivantes :

| Tests | Notes globale |
|---|---|
| 3 | 10 |
| 8 | 10 |
| 10 | 10 |

Exemple 2 à 6

Selon l'exemple 1, on prépare divers films composites ayant les caractéristiques suivantes :

- épaisseur des couches externes (B) : 1 micromètre ;
- couche (A) : polyester référence (a1), non chargé ;
- épaisseur totale : 50 micromètres.

| ex. | Proportion pondérale des polymères dans la couche (B) | | | Quantité de charge présente dans le polyester cristallin de la couche (B) |
|---|---|---|---|---|
| | % | % | % | |
| 2 | a2 40 | b2 40 | c1 20 | 3500 ppm kaolinite diamètre médian : 1,1 micron |
| 3 | a2 50 | b2 25 | c1 25 | 3500 ppm kaolinite diamètre médian : 1,1 micron |
| 4 | a2 40 | b2 40 | c2 20 | 3500 ppm kaolinite diamètre médian : 1,1 micron |
| 5 | a2 40 | b2 20 | c2 40 | 3500 ppm kaolinite diamètre médian : 1,1 micron |
| 6 | a1 50 | b1 25 | c1 25 | |

Les films ont les propriétés suivantes :

| ex. | Coefficient friction | | Cotation aux tests d'adhésion | | |
|---|---|---|---|---|---|
| | s | d | test 3 | test 8 | test 10 |
| 2 | 0,61 | 0,53 | 10 | 10 | 8 |
| 3 | 0,43 | 0,30 | 10 | 8 | 9 |
| 4 | 0,77 | 0,47 | 10 | 10 | 9 |
| 5 | 0,56 | 0,45 | 8 | 10 | 9 |
| 6 | | | 10 | 8 | 8 |

Ces films présentent des propriétés d'adhésion satisfaisantes, une bonne machinabilité.

Exemple 7

Selon le mode opératoire de l'exemple 1, on prépare un film composite analogue mais dans lequel la couche (B) est constituée par le mélange ternaire suivant :

| | Référence polymère | Proportions relatives % en poids |
|---|---|---|
| Polyester cristallin ou semi-cristallin | a1 | 70 |
| Copolyester sensible à l'eau | b2 | 15 |
| Copolyester sensible aux solvants organiques | c1 | 15 |

Le film composite ne donne pas un résultat satisfaisant au test 8, mais donne des résultats satisfaisants aux tests 3 et 10.

Example 8 (comparatif)

Selon le mode opératoire de l'exemple 4, on prépare un film composite analogue mais dans lequel la couche (B) est constituée par le mélange ternaire suivant :

| | Référence polymère | Proportions relatives % en poids |
|---|---|---|
| Polyester cristallin ou semi-cristallin | a1 | 70 |
| Copolyester sensible à l'eau | b2 | 15 |
| Copolyester sensible aux solvants organiques | c2 | 15 |

Le film composite ne donne pas un résultat satisfaisant au test 8, mais donne des résultats satisfaisants aux tests 3 et 10.

## Revendications

**1.** Films polyester composites orientés, à adhérence améliorée vis-à-vis des revêtements finals d'application constitués par un film support (A) d'un polyester cristallin ou semi-cristallin, comportant sur au moins une de ses faces une couche contigüe d'un revêtement primaire d'adhérence (B) à base d'un copolyester sensible à l'eau caractérisé en ce que la couche (B) est constituée apr un mélange ternaire comprenant :

a) de 30 à 65 % en poids d'un polyester cristallin, semi-cristallin ou cristallisable ;

b) de 15 à 60 % en poids d'un copolyester sensible à l'eau présentant une pluralité de groupes hydrophiles de formule générale :

$$(-SO_3)_nM \qquad (I)$$

dans laquelle :

- n est étal à 1 ou 2
- M représente un atome d'hydrogène, un métal alcalin, un métal alcalino-terreux, un cation ammonium, un cation ammonium quaternaire.

c) de 10 à 55 % en poids d'un polyester ou copolyester non cristallisé et non cristallisable présentant à température ordinaire une réaction visible (gonflement, trouble, gel, solubilité) vis-à-vis des solvants organiques.

**2.** Films composites orientés selon la revendication 1, caractérisés en ce que le polyester cristallin, semi-cristallin ou cristallisable utilisé comme constituant de la couche (A) et composant (a) du mélange ternaire est insensible aux solvants du groupe des esters, des cétones et des hydrocarbures halogénés.

**3.** Films composites orientés selon l'une quelconque des revendications 1 à 2, caractérisés en ce que le polyester cristallin, semi-cristallin ou cristallisable utilisé comme constituant de la couche (A) et composant (a) du mélange ternaire est un homopolyester ou un copolyester de l'acide téréphtatique comportant au moins 80 % en moles de motifs téréphtalates.

**4.** Films composites orientés selon l'une quelconque des revendications 1 à 3, caractérisés en ce que le polyester cristallin, semi-cristallin ou cristallisable utilisé comme constituant de la couche (A) et composant (a) du mélange ternaire est le polytéréphtalate d'éthylèneglycol.

**5.** Films composites orientés selon l'une quelconque des revendications 1 à 4, caractérisés en ce que le copolyester sensible à l'eau utilisé comme constituant (b) du mélange ternaire présente une pluralité de motifs dérivés de diacides aromatiques ou leurs dérivés de formule :

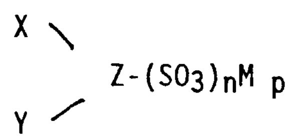 (II)

dans laquelle :
- n est étal à 1 ou 2
- M représente un atome d'hydrogène, un métal alcalin, un métal alcalino-terreux, un cation ammonium, un cation ammonium quaternaire.
- Z est un radical aromatique polyvalent.
- X et Y sont des radicaux hydroxycarbonyles ou dérivés : esters d'alcools aliphatiques inférieur ou halogénures d'acides (chlorure, bromure).
- p est un nombre entier égal à 1 ou 2.

**6.** Films composites orientés selon l'une quelconque des revendications 1 à 5, caractérisés en ce que le copolyester sensible à l'eau utilisé comme constituant (b) du mélange ternaire présente une pluralité de motifs dérivés d'un acide hydroxysulfonylisophtalique.

**7.** Films composites orientés selon l'une quelconque des revendications 1 à 6, caractérisés en ce que le copolyester sensible à l'eau utilisé comme constituant (b) du mélange ternaire présente en outre une pluralité de motifs dérivés de l'acide téréphtalique.

**8.** Films composites orientés selon la revendication 7, caractérisés en ce que le copolyester sensible à l'eau utilisé comme constituant (b) du mélange ternaire présente à la fois une pluralité de motifs dérivés de l'acide téréphtalique et une pluralité de motifs dérivés de l'acide isophtalique.

**9.** Films composites orientés selon la revendication 8, caractérisés en ce que dans le copolyester sensible à l'eau le nombre de motifs dérivés de l'acide isophtalique représente jusqu'à 70 % du total des motifs téréphtalate/isophtalate.

**10.** Films composites orientés selon l'une quelconque des revendications 1 à 9, caractérisés en ce que le copolyester sensible à l'eau utilisé comme constituant (b) du mélange ternaire présente une pluralité de motifs dérivés de l'éthylèneglycol et/ou de ses oligomères de formule $HO-(CH_2-CH_2-O)_m-H$ dans laquelle m est un nombre entier de 2 à 10.

**11.** Films composites orientés selon la revendication 10, caractérisés en ce que la teneur pondérale du copolyester sensible à l'eau en motifs dérivés des oligomères de l'éthylèneglycol est comprise entre 2 et 30 %.

**12.** Films composites orientés selon l'une quelconque des revendications 1 à 11, caractérisés en ce que la teneur des copolyesters sensible à l'eau en motifs récurrents à groupes oxysulfonyles exprimée par rapport au nombre total de motifs récurrents de même nature est comprise entre 5 et 20 %.

**13.** Films composites orientés selon l'une quelconque des revendications 1 à 12, caractérisés en ce que le copolyester sensible à l'eau utilisé comme constituant (b) du mélange ternaire comporte de 5 à 20 % en moles de motifs dérivés de l'acide sulfo-5 isophtalique par rapport au total des motifs dérivés des acides dicarboxyliques.

**14.** Films composites orientés selon l'une quelconque des revendications 1 à 13, caractérisés en ce que le polyester non cristallisé et non cristallisable utilisé comme constituant (c) du mélange ternaire présente une réaction visible vis-à-vis de solvants organiques du groupe constitué par les esters, les cétones et les hydrocarbures halogénés.

**15.** Films composites orientés selon l'une quelconque des revendications 1 à 14, caractérisés en ce que le polyester sensible aux solvants organiques utilisé comme constituant (c) du mélange ternaire est un copolyester dérivé de l'acide téréphtalique et de l'éthylèneglycol et de ses oligomères comportant une pluralité de motifs réccurents dérivés de l'acide isophtalique et/ou des acides dicarboxyliques aliphatiques et/ou d'alkylènediols comportant au moins 3 atomes de carbone.

**16.** Films composites orientés selon l'une quelconque des revendications 1 à 15, caractérisés en ce que le polyester sensible aux solvants organiques utilisé comme constituant (c) du mélange ternaire est un copolyester non cristallisable présentant une pluralité de motifs réccurents dérivés de l'acide téréphtalique, de l'acide isophtalique, de l'éthylèneglycol et du néopentylglycol.

**17.** Films composites orientés selon l'une quelconque des revendications 1 à 16, caractérisés en ce que le polyester sensible aux solvants organiques utilisé comme constituant (c) du mélange ternaire est un copolyester non cristallisable présentant une pluralité de motifs réccurents dérivés de l'acide téréphtalique, de l'éthylèneglycol et du bis hydroxyméthyl cyclohexane.

**18.** Films composites orientés selon l'une quelconque des revendications 1 à 17, caractérisés en ce que l'épaisseur de la couche (des couches) (B) est comprise entre 0,3 et 10 micromètres.

**19.** Procédé d'obtention des films composites selon l'une quelconque des revendications 1 à 18, caractérisé en ce qu'on procède à la coextrusion, dans une première filière linéaire, d'un polyester cristallisable en un film amorphe (A) et simultanément, par un moins une deuxième filière disposée parallèlement à la première, d'au moins un film (B) d'un mélange ternaire a) b) c) déposé sur au moins une des faces du film (A) puis procède au refroidissement, à l'étirage et à la thermofixation du film composite de façon connue.

**Claims**

**1.** Oriented composite polyester films with improved adhesiveness towards final application coatings, consisting of a base film (A) of a crystalline or semicrystalline polyester comprising on at least one of its faces an adjacent layer of an adhesion primer coating (B) based on a water-sensitive copolymer, characterised in that the layer (B) consists of a ternary mixture comprising:

a) from 30 to 65% by weight of a crystalline, semi-crystalline or crystallisable polyester,

b) from 15 to 60% by weight of a water-sensitive copolyester, containing a plurality of hydrophilic groups of general formula:

$(-SO_3)_nM$ (I)

in which:

- n is 1 or 2, and
- M denotes a hydrogen atom, an alkali metal, an alkaline-earth metal, an ammonium cation or a quaternary ammonium cation,

c) from 10 to 55% by weight of an uncrystallised and uncrystallisable polyester or copolyester exhibiting a visible (swelling, turbidity, gel, solubility) reaction towards organic solvents at ordinary temperature.

**2.** Oriented composite films according to Claim 1, characterised in that the crystalline, semicrystalline or crystallisable polyester employed as constituent of the layer (A) and component (a) of the ternary mixture is insensitive to the solvents from the group of esters, ketones and halogenated hydrocarbons.

**3.** Oriented composite films according to any one of Claims 1 to 2, characterised in that the crystalline, semicrystalline or crystallisable polyester employed as constituent of the layer (A) and component (a) of the ternary mixture is a homopolyester or a copolyester of terephthalic acid containing at least 80 mol % of terephthalate units.

**4.** Oriented composite films according to any one of Claims 1 to 3, characterised in that the crystalline, semicrystalline or crystallisable polyester employed as constituent of the layer (A) and component (a) of the ternary mixture is polyethylene terephthalate.

**5.** Oriented composite films according to any one of Claims 1 to 4, characterised in that the water-sensitive copolyester employed as component (b) of the ternary mixture contains a plurality of units derived from aromatic diacids or their derivatives of formula:

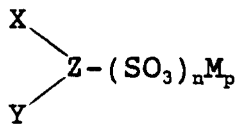

(II)

in which:

- n is 1 or 2,
- M denotes a hydrogen atom, an alkali metal, an alkaline-earth metal, an ammonium cation or a quaternary ammonium cation,
- Z is a polyvalent aromatic radical,
- X and Y are hydrocarbon radicals or derivatives: esters of lower aliphatic alcohols or acid halides (chloride, bromide), and
- p is an integer equal to 1 or 2.

**6.** Oriented composite films according to any one of Claims 1 to 5, characterised in that the water-sensitive copolyester employed as component (b) of the ternary mixture contains a plurality of units derived from a hydroxysulphonylisophthalic acid.

**7.** Oriented composite films according to any one of Claims 1 to 6, characterised in that the water-sensitive copolyester employed as component (b) of the ternary mixture additionally contains a plurality of units derived from terephthalic acid.

**8.** Oriented composite films according to Claim 7, characterised in that the water-sensitive copolyester employed as component (b) of the ternary mixture contains both a plurality of units derived from terephthalic acid and a plurality of units derived from isophthalic acid.

**9.** Oriented composite films according to Claim 8, characterised in that the number of units derived from isophthalic acid in the water-sensitive copolyester represents up to 70% of the total of the terephthalate/ isophthalate units.

**10.** Oriented composite films according to any one of Claims 1 to 9, characterised in that the water-sensitive copolyester employed as component (b) of the ternary mixture contains a plurality of units derived from ethylene glycol and/or from its oligomers of formula $HO-(CH_2-CH_2-O)_m-H$ in which m is an integer from 2 to 10.

**11.** Oriented composite films according to Claim 10, characterised in that the weight content of the units derived from the ethylene glycol oligomers in the water-sensitive copolyester is between 2 and 30%.

**12.** Oriented composite films according to any one of Claims 1 to 11, characterised in that the content of the recurring units containing oxysulphonyl groups in the water-sensitive copolyesters, based on the total number of the recurring units of the same nature is between 5 and 20%.

**13.** Oriented composite films according to any one of Claims 1 to 12, characterised in that the water-sensitive copolyester employed as component (b) of the ternary mixture contains from 5 to 20 mol % of units derived from 5-sulphoisophthalic acid, based on the total of the units derived from dicarboxylic acids.

**14.** Oriented composite films according to any one of Claims 1 to 13, characterised in that the uncrystallised and uncrystallisable polyester employed as constituent (c) of the ternary mixture exhibits a visible reaction towards organic solvents from the group consisting of esters, ketones and halogenated hydrocarbons.

**15.** Oriented composite films according to any one of Claims 1 to 14, characterised in that the polyester which is sensitive to organic solvents and employed as component (c) of the ternary mixture is a copolyester derived from terephthalic acid and from ethylene glycol and from its oligomers containing a plurality of recurrent units derived from isophthalic acid and/or aliphatic dicarboxylic acids and/or alkylene diols containing at least 3 carbon atoms.

**16.** Oriented composite films according to any one of Claims 1 to 15, characterised in that the polyester which is sensitive to organic solvents and employed as component (c) of the ternary mixture is a noncrystallisable copolyester containing a plurality of recurrent units derived from terephthalic acid, isophthalic acid, ethylene glycol and neopentyl glycol.

**17.** Oriented composite films according to any one of Claims 1 to 16, characterised in that the polyester which is sensitive to organic solvents and employed as component (c) of the ternary mixture is a noncrystallisable copolyester containing a plurality of recurrent units derived from terephthalic acid, ethylene glycol and bishydroxymethylcyclohexane.

**18.** Oriented composite films according to any one of Claims 1 to 17, characterised in that the thickness of the layer (of the layers) (B) is between 0.3 and 10 micrometres.

**19.** Process for producing composite films according to any one of Claims 1 to 18, characterised in that the coextrusion is carried out, in a first linear die, of a crystallisable polyester as an amorphous film (A) and simultaneously, by means of at least one second die arranged parallel to the first, of at least one film (B) of a ternary mixture a) b) c) deposited on at least one of the faces of the film (A) and then performing the cooling, the drawing and the heat-setting of the composite film in a known manner.

## Patentansprüche

**1.** Orientierte zusammengesetzte Polyesterfilme bzw. Polyesterverbundfilme mit verbesserter Adhäsion gegenüber Endanwendungsüberzügen, bestehend aus einem Trägerfilm (A) eines kristallinen oder teilkristallinen Polyesters, der auf wenigstens einer seiner Flächen eine angrenzende Schicht eines Haftgrundierungsüberzugs (B) trägt, auf Basis eines wasserempfindlichen Copolyesters, dadurch gekennzeichnet, daß die Schicht (B) aus einem ternären Gemisch besteht umfassend

a) 30 bis 65 Gewichtsprozent eines kristallinen, semikristallinen oder kristallisierbaren Polyesters;

b) 15 bis 60 Gewichtsprozent eines wasserempfindlichen Copolyesters, der eine Vielzahl von hydrophilen Gruppen der allgemeinen Formel

$(-SO_3)_nM$ (I)

aufweist, worin:

- n gleich 1 oder 2 ist,
- M ein Wasserstoffatom, ein Alkalimetall, ein Erdalkalimetall, ein Ammoniumkation, ein quaternäres Ammoniumkation darstellt;

c) 10 bis 55 Gewichtsprozent eines nicht kristallisierten und nicht kristallisierbaren Polyesters oder Copolyesters, der bei gewöhnlicher Temperatur eine sichtbare Reaktion (Quellen, Trübung, Gel, Löslichkeit) gegenüber organischen Lösungsmitteln aufweist.

**2.** Orientierte zusammengesetzte Filme bzw. Verbundfilme gemäß Anspruch 1, dadurch gekennzeichnet, daß der kristalline, semikristalline oder kristallisierbare Polyester, der als Bestandteil der Schicht (A) und Komponente (a) des ternären Gemisches verwendet wird, gegenüber Lösungsmitteln der Gruppe der Ester, der Ketone und halogenierten Kohlenwasserstoffe unempfindlich ist.

**3.** Orientierte zusammengesetzte Filme gemäß einem der Ansprüche 1 - 2, dadurch gemennzeichnet, daß der kristalline, semikristalline oder kristallisierbare Polyester, der als Bestandteil der Schicht (A) und Komponente (a) des ternären Gemisches verwendet wird, ein Homopolyester oder ein Copolyester der Terephthalsäure mit mindestens 80 Mol% Terephthalateinheiten ist.

4. Orientierte zusammengesetzte Filme gemäß einem der Ansprüche 1 - 3, dadurch gekennzeichnet, daß der kristalline, semikristalline oder kristallisierbare Polyester, der als Bestandteil der Schicht (A) und Komponente (a) des ternären Gemisches verwendet wird, das Polyethylenglycolterephthalat ist.

5. Orientierte zusammengesetzte Filme nach einem der Ansprüche 1 - 4, dadurch gekennzeichnet, daß der wasserempfindliche Copolyester, der als Bestandteil (b) des ternären Gemisches verwendet wird, eine Vielzahl von Einheiten abgeleitet von aromatischen Disäuren oder ihren Derivaten der Formel

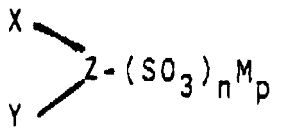 (II)

aufweist, worin:
- n gleich 1 oder 2 ist,
- M ein Wasserstoffatom, ein Alkalimetall, ein Erdalkalimetall, ein Ammoniumkation, ein quaternäres Ammoniumkation darstellt,
- Z ein mehrwertiger aromatischer Rest ist,
- X und Y Hydroxacarbonylreste oder Derivate sind: Ester niederer aliphatischer Alkohole oder Säurehalogenide (Chlorid, Bromid),
- p ist eine ganze Zahl gleich 1 oder 2.

6. Orientierte zusammengesetzte Filme nach einem der Ansprüche 1 - 5, dadurch gekennzeichnet, daß der wasserempfindliche Copolyester, der als Bestandteil (b) des ternären Gemisches verwendet wird, eine Vielzahl von Gruppierungen abgeleitet von einer Hydroxysulfonylisophthalsäure aufweist.

7. Orientierte zusammengesetzte Filme gemäß einem der Ansprüche 1 - 6, dadurch gekennzeichnet, daß der wasserempfindliche Copolyester, der als Bestandteil (b) des ternären Gemisches verwendet wird, außerdem eine Vielzahl von Einheiten, abgeleitet von der Terephthalsäure, aufweist.

8. Orientierte zusammengesetzte Filme gemäß Anspruch 7, dadurch gekennzeichnet, daß der wasserempfindliche Copolyester, der als Bestandteil (b) des ternären Gemisches verwendet wird, gleichzeitig eine Vielzahl von Einheiten, abgeleitet von der Terephthalsäure und eine Vielzahl von Einheiten, abgeleitet von der Isophthalsäure aufweist.

9. Orientierte zusammengesetzte Filme gemäß Anspruch 8, dadurch gekennzeichnet, daß in dem wasserempfindlichen Copolyester die Zahl der Einheiten, abgeleitet von der Isophthalsäure, bis zu 70 % der Gesamtheit der Terephthalat/Isophthalateinheiten beträgt.

10. Orientierte zusammengesetzte Filme gemäß einem der Ansprüche 1-9, dadurch gekennzeichnet, daß der wasserempfindliche Copolyester,der als Bestandteil (b) des ternären Gemisches verwendet wird, eine Vielzahl von Einheiten, abgeleitet von Ethylenglykol und/oder seinen Oligomeren der Formel $HO-(CH_2-CH_2-O)_mH$, worin m eine ganze Zahl von 2 bis 10 ist, aufweist.

11. Orientierte zusammengesetzte Filme gemaß Anspruch 10, dadurch gekennzeichnet, daß der Gewichtsgehalt des wasserempfindlichen Copolyesters an Einheiten, abgeleitet von Oligomeren des Ethylenglykols, zwischen 2 und 30 % liegt.

12. Orientierte zusammengesetzte Filme gemäß einem der Ansprüche 1 - 11, dadurch gekennzeichnet, daß der Gehalt der wasserempfindlichen Copolyester an wiederkehrenden Einheiten mit Oxysulfonylgruppen, ausgedrückt unter Bezugnahme auf die Gesamtzahl der wiederkehrenden Einheiten gleicher Natur, zwischen 5 und 20 % beträgt.

13. Orientierte zusammengesetzte Filme nach einem der Ansprüche 1 - 12, dadurch gekennzeichnet, daß der wasserempfindliche Copolyester, der als Bestandteil (b) des ternären Gemisches verwendet wird, von 5 bis 20 Mol% Einheiten abgeleitet von der 5-Sulfo-isophthalsäure in Bezug auf die Gesamtheit der Einheiten, abgeleitet von den Dicarbonsäuren, enthält.

**14.** Orientierte zusammengesetzte Filme gemäß einem der Ansprüche 1 - 13, dadurch gekennzeichnet, daß der nicht kristallisierte und nicht kristallisierbare Polyester, der als Bestandteil (c) des ternären Gemisches verwendet wird, eine sichtbare Reaktion gegenüber organischen Lösungsmitteln der Gruppe bestehend aus den Estern, den Ketonen und den halogenierten Kohlenwasserstoffen aufweist.

**15.** Orientierte zusammengesetzte Filme nach einem der Ansprüche 1 - 14, dadurch gekennzeichnet, daß der gegenüber den organischen Lösungsmitteln empfindliche Polyester, der als Bestandteil (c) des ternären Gemisches verwendet wird, ein Copolyester ist, abgeleitet von der Terephthalsäure und Ethylenglykol und seinen Oligomeren mit einer Vielzahl von wiederkehrenden Einheiten abgeleitet von der Isophthalsäure und/oder den aliphatischen Dicarbonsäuren und/oder Alkylendiolen mit mindestens 3 Kohlenstoffatomen.

**16.** Orientierte zusammengesetzte Filme gemäß einem der Ansprüche 1 - 15, dadurch gekennzeichnet, daß der gegenüber organischen Lösungsmitteln empfindliche Polyester, der als Bestandteil (c) des ternären Gemisches verwendet wird, ein nicht kristallisierbarer Copolyester ist, der eine Vielzahl von wiederkehrenden Einheiten, abgeleitet von der Terephthalsäure, der Isophthalsäure, dem Ethylenglykol und dem Neopentylglykol, aufweist.

**17.** Orientierte zusammengesetzte Filme gemäß einem der Ansprüche 1 - 16, dadurch gekennzeichnet, daß der gegenüber den organischen Lösungsmitteln empfindliche Polyester, der als Bestandteil (c) des ternären Gemisches verwendet wird, ein nicht kristallisierbarer Copolyester ist, der eine Vielzahl von wiederkehrenden Einheiten abgeleitet von der Terephthalsäure, dem Ethylenglykol und dem Bishydroxymethylcyclohexan, aufweist.

**18.** Orientierte zusammengesetzte Filme gemäß einem der Ansprüche 1 - 17, dadurch gekennzeichnet, daß die Dicke der Schicht (der Schichten) (B) zwischen 0,3 und 10 Mikrometer liegt.

**19.** Verfahren zur Herstellung der zusammengesetzten Filme gemäß einem der Ansprüche 1 - 18, dadurch gekennzeichnet, daß man die Coextrusion in einer ersten linearen Spinndüse eines kristallisierbaren Polyesters zu einem amorphen Film (A) und gleichzeitig durch mindestens eine zweite Spinndüse, die parallel zur ersten angeordnet ist, mindestens eines Films (B) eines ternären Gemisches a)b)c) durchführt, der auf mindestens einer der Seiten des Films (A) abgesetzt wird, daß man dann das Abkühlen, das Verstrecken und die Thermofixierung des zusammengesetzten Films in bekannter Weise durchführt.